# EUROPEAN PATENT SPECIFICATION

(11) **EP 1 832 715 B1**
(45) Date of publication and mention of the grant of the patent: **28.07.2010**
(21) Application number: 07250994.6
(22) Date of filing: 09.03.2007
(51) Int. Cl.: F01D 11/00, F16J 15/08

(54) **Gas turbine segmented component seal**
Dichtung für segmentierte Gasturbinenkomponenten
Joint d'étanchéité pour des composants segmentés de turbine à gaz

(30) Priority: 09.03.2006 US 372404
(43) Date of publication of application: 12.09.2007
(73) Proprietor: United Technologies Corporation, Hartford, CT 06101 (US)
(72) Inventor: Paauwe, Corneil, Manchester, Connecticut 06040 (US)
(74) Representative: Leckey, David Herbert

(56) References cited:
- EP-A- 0 943 847
- EP-A- 1 521 036
- GB-A- 2 401 658
- US-A- 4 537 024

## Description

### BACKGROUND OF THE INVENTION

### (1) FIELD OF THE INVENTION

The invention relates to gas turbine engine components in general, and specifically to a seal for preventing leakage of high pressure air or other fluids between segmented components found in such engines.

### (2) DESCRIPTION OF THE RELATED ART

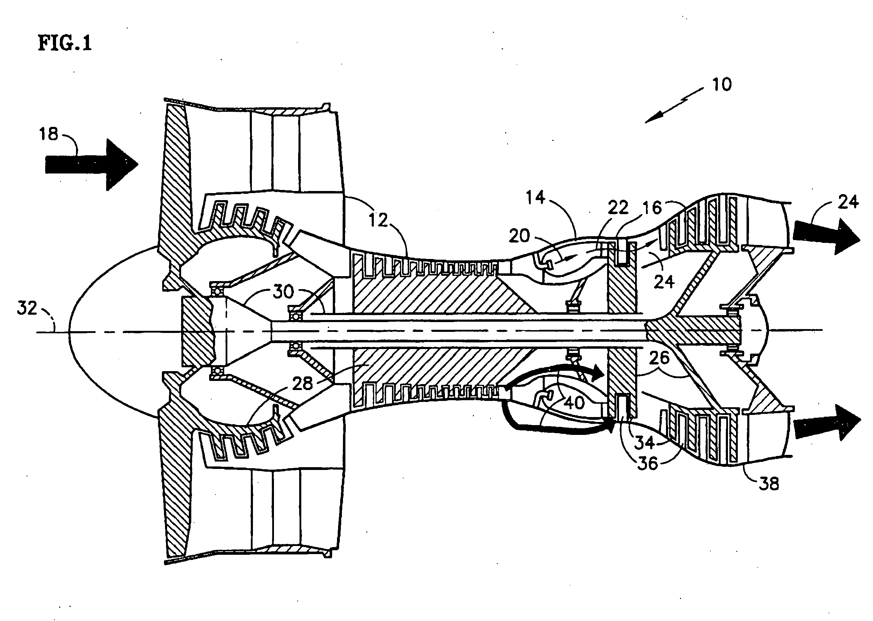

As illustrated in FIG. 1, a gas turbine engine 10 comprises one or more forward compressor sections 12, a central combustor section 14 and one or more rearward turbine sections 16. The engine 10 operates by compressing ambient air 18 with the compressors 12, adding fuel upstream of the combustor 14 and burning a fuel-air mixture 20 in the combustor 14. High temperature combustion gases 22 are directed axially rearward from the combustor 14, through an annular duct 24 disposed in the turbines 16. The combustion gases 22 interact with one or more turbine rotors 26 disposed in the duct 24. The turbine rotors 26 are coupled to compressor rotors 28 via concentric shafts 30 rotating about a central longitudinal axis 32 of the engine 10. Gas turbine engines are known to power aircraft, ships and electrical generators.

Extending into the annular gas duct 24 are alternating circumferential stages of rotating blades 34 and stationary vanes 36. The stationary vanes 36 extend radially inwardly from a casing structure 38 surrounding the turbines 16. To prevent oxidation of the vanes 36 and other stationary components due to the hot combustion gases 22, low temperature compressor air 40 is directed radially inboard and outboard of the duct 24 to the components. The compressor air 40 is maintained at a higher pressure than the combustion gas 22 pressure, to ensure a continuous supply of compressor air 40 reaches the components.

Because stationary components such as vanes, shrouds, supports and the like are subject to extreme temperature gradients, they can develop cracks due to thermal mechanical fatigue (TMF). To reduce the occurrence of TMF induced cracking, these components are typically installed in semi annular segments distributed circumferentially about the engine's longitudinal axis. The segmented components are uncoupled from one another, thus allowing them to expand and contract independently. In addition to their improved resistance to TMF, segmented components are also less expensive to repair and/or replace after extended use.

Despite the aforementioned benefits, axial and radial gaps must be included between adjacent components to allow for thermal expansion. These gaps require sealing to ensure an adequate pressure differential exists between the compressor air and the combustion gas. Maintaining a compressor air pressure that is greater than the combustion gas pressure ensures a continuous flow of compressor air and prevents backflow of the combustion gas. Excessive leakage of the compressor air may cause premature oxidation of the components and can increase the engine's fuel burn. With jet fuel accounting for up to sixty five percent of the operating expense of a commercial airliner, any reduction in fuel burn is beneficial.

Various seal configurations are known to restrict leakage of a pressurized fluid through a gap between two components. Feather seals are the type most commonly used between segmented components in gas turbine engines. Feather seals comprise a slot in the adjacent components that are open to the gap, and a bridging element disposed in the slots, spanning across the gap.

Flat bridging elements, such as those disclosed in U.S. patent number 5,154,577 to Kellock, et al, are fit into the adjoining slots. They depend on the higher-pressure compressor air to seat the bridging elements against the slots to form the seal. Assembly damage, misaligned slots, slot surface finish and low compressor air pressure may negatively affect the performance of flat bridging elements.

Resilient bridging elements, such as those disclosed in U.S. patent number 4,537,024 to Grosjean (which forms the basis for the preamble to claim 1), are press fit into the adjoining slots. They rely on the contact pressure between the bridging element and the slot being greater than the compressor air pressure to form the seal. However, the single loop ends of the Grosjean bridging element offer limited contact pressure with the slot and are subject to compression about their minor axis.

EP-A-1521036, GB-A-2401658 and EP-A-943847 show further sealing arrangements.

Although misaligned slots, slot surface finish and low compressor air pressure have a less negative impact on resilient bridging elements, feather seal improvement is still needed.

### BRIEF SUMMARY OF THE INVENTION

In accordance with the present invention, there is provided apparatus as claimed in claim 1.

A primary feature of the invention is the approximately wave shaped profile of the end portions. The approximate wave shape increases the contact force between the ends of the bridging element and the slot surfaces. Also, the approximately wave shaped ends force the flat center portion against a slot surface.

A primary advantage of the seal is an increased leakage restriction over conventional seals with minimum increase in weight and cost.

Other details of the present invention, as well as other objects and advantages attendant thereto, are set forth in the following detailed description and the accompanying drawings wherein like reference numerals depict like elements.

### BRIEF DESCRIPTION OF THE SEVERAL VIEWS OF THE DRAWINGS

FIG. 1 is a simplified sectional view of an axial flow gas turbine engine.

FIG. 2 is a partial sectional view of a high pressure turbine of the type used in the gas turbine engine of Fig. 1.

FIG. 3 is a partial isometric view of a segmented vane assembly of the type used in the high pressure turbine of Fig. 2.

FIG. 4a is a simplified sectional view, taken perpendicular to the longitudinal axis of the slots, of a seal in accordance with an embodiment of the invention disposed between segmented components with aligned slots.

FIG. 4b is a simplified sectional view, taken perpendicular to the longitudinal axis of the slots, of a seal in accordance with an embodiment of the invention disposed between segmented components with misaligned slots.

FIG. 4c is a simplified sectional view of a gap bridging element of FIGS. 4a and 4b prior to installation.

### DETAILED DESCRIPTION OF THE INVENTION

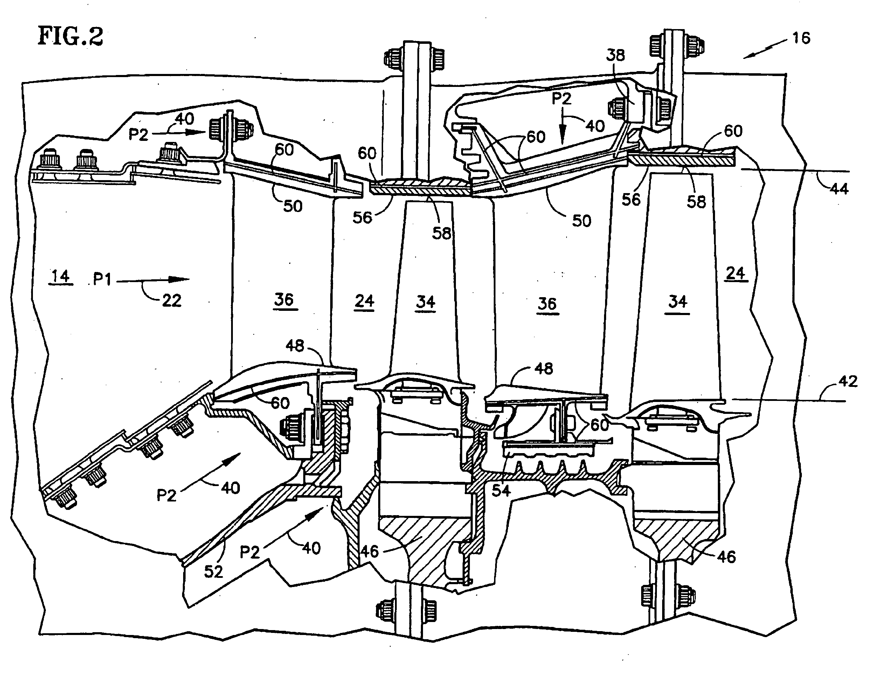

An exemplary turbine 16 of a gas turbine engine 10 is illustrated in Fig. 2. The high temperature combustion gases 22 discharge rearward from the combustor 14, at a pressure (P1), to an annular duct 24 defined by an inner periphery 42 and an outer periphery 44. Stationary vanes 36 guide the combustion gases 22 to rotating blades 34, extending radially outwardly from rotor disks 46. The vanes 36 span radially between inner 48 and outer 50 shrouds, which are suspended from an inner support 52 and/or outer casing 38 structures. Inner seals 54 restrict leakage of the combustion gases 22 from beneath the vanes 36 at the inner periphery 42. Outer seals 56 restrict leakage of the combustion gases 22 from above tips 58 of the blades 34 at the outer periphery 44.

Those skilled in the art will appreciate that each of the above-described turbine 16 components must be actively cooled, because the combustion gas 22 temperature typically exceeds the melting temperatures of the components' base alloy. For cooling purposes, relatively low temperature compressor air 40 is distributed from the compressor 12 (Fig. 1), at a pressure (P2), to the inner 42 and outer 44 duct peripheries and away from the annular duct 24. The compressor air 40 pressure (P2) is maintained at a higher level than the combustion gas 22 pressure (P1) in order to allow compressor air to flow through turbine 16 components for cooling and thus preventing overheating and premature oxidation of the components. Seals ensure a typical pressure ratio (P2:P1) of approximately 1.03, but certainly greater than 1.0, exists during all engine operating conditions.

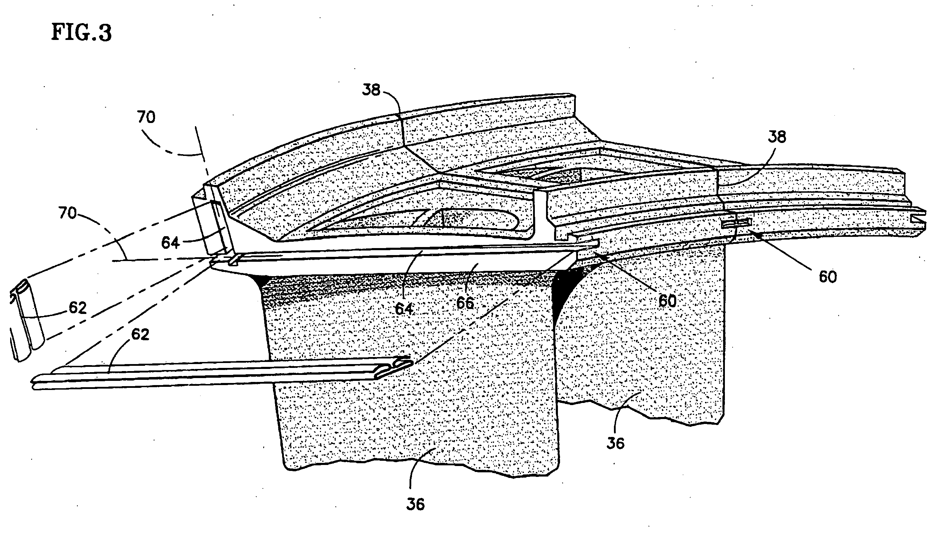

Circumferentially segmented components such as the vanes 36, inner seals 54, outer seals 56 and the like, include a seal 60 between adjacent segments. As best illustrated in Fig. 3, a seal 60 in accordance with an embodiment of the invention contains a bridging element 62 that fits into axial and/or radial slots 64 machined into a mate face 66 of the vanes 36. With the vanes 36. installed, a gap 38 between the vanes 36 typically between 0.010 inch (0.254 mm) and 0.030 inch (0.762 mm) depending on the size of the components accounts for thermal growth and reduces TMF. The slots 64 face one another and are open to the gap 68. The bridging element 62 fits into the slots 64, while spanning across the gap 68. Although segmented vanes 36 are illustrated in the figure, other segmented components are similarly sealed.

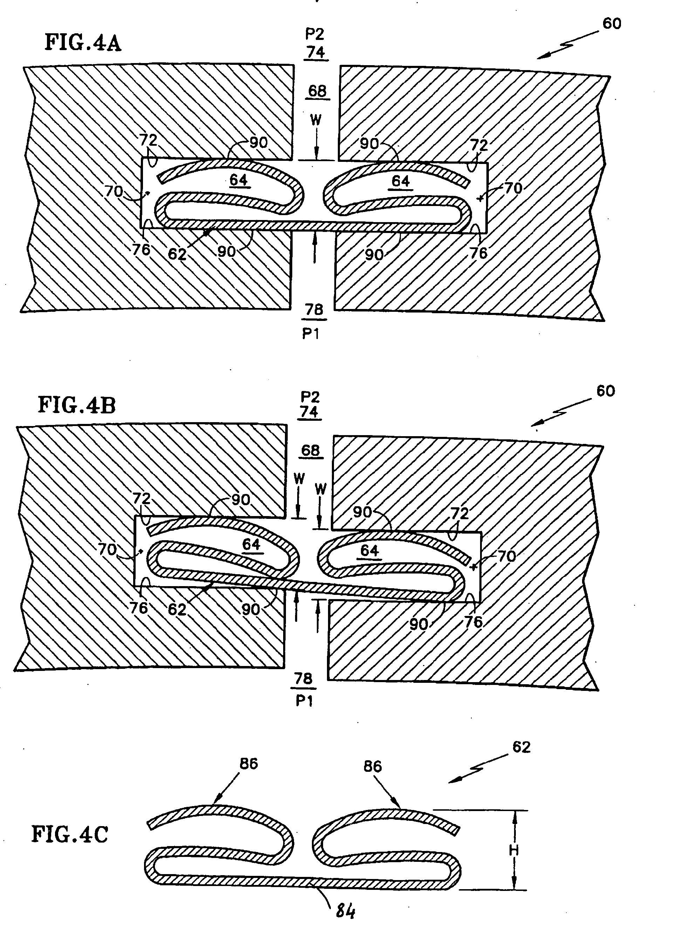

Further details of a segmented component seal 60 according to an embodiment of the invention are generally illustrated in Figs. 4a-4c. Opposed slots 64 are open to a gap 68 and each contain a longitudinal axis 70, an upstream surface 72 proximate a first chamber 74 and a downstream surface 76 proximate a second chamber 78. Although the upstream 72 and downstream 76 surfaces are shown parallel in the illustration, they could also converge or diverge away from the gap 68. Typically, the slots 64 have an opening width (W) of between about 0.030 inch (0.762 mm) and 0.060 inch (1.524 mm). The slots 64 are preferably aligned as illustrated in Fig. 4a, but in some instances they may be slightly misaligned due to manufacturing tolerances as illustrated in Fig. 4b. Preferably, the slot axis 70 is linear, but a curvilinear slot axis 70 may also be used. The slots are produced by casting, abrasive machining, electrodischarge machining, or other suitable means.

The bridging element 62 contains a sectional profile, transverse to the longitudinal slot axis 64 that includes a flat shaped central portion 84 disposed between two, approximately wave shaped, end portions 86.

The central portion 84 spans across the gap 68 and the end portions 86 seat against surfaces 72, 76 of each slot 64. For lower (P2:P1) pressure ratio installations, the bridging element 62 may be installed with the central portion 84 positioned adjacent the upstream surface 72. Preferably, the bridging element 62 is installed with the central portion 84 positioned adjacent the downstream surface 76. When installed in the latter configuration, the higher fluid pressure P2 in the first chamber 74 and in the gap 68 aids in seating the bridging element 62 against the downstream surface 76.

The end portions 86 are resiliently sprung into the slots 64, and are in direct contact with each of the upstream 72 and downstream 76 surfaces. The end portions 86 alternate in direction, first away from and then back toward the central portion 84 and the gap 68, thus approximating a waveform. Although the examples in the figures illustrate approximately one wave cycle, more or less wave cycles may be used. The number of wave cycles depends on the slot width (W) and the amount of resilient spring force necessary to positively seat the end portions 86 against the upstream 72 and downstream 76 surfaces.

As may best be seen in FIG. 4C, a free height (H) of the uninstalled bridging element 62 is slightly larger than the opening width (W) of the slot 64. Preferably, the free height (H) is between 0.005 inch (0.127 mm) and 0.020 inch (0.508 mm) larger than the opening width (W). These dimensions are exemplary only and the actual sizes may vary for a specific application. The bridging element 62 is made of a material with suitable low temperature ductility and high temperature strength. Preferably, a Nickel or Cobalt based alloy strip approximately 0.010 inch (0.254 mm) thick is used. Stamping, progressive rolling or other suitable forming process may be used to form the profile of the strip.

Since the free height (H) is greater than the opening width (W), the end portions 86 are compressed together and resiliently sprung into the slots 64 during assembly. The interference fit between the end portions 86 and the upstream 80 and downstream 82 surfaces creates four independent leakage restrictions 90. The multiple restrictions 90 significantly reduce leakage from the first chamber 74 to the second chamber 78. As may also be seen in FIG. 4B, the multiple restrictions 90 remain intact, even if the slots 64 are slightly misaligned.

## Claims

1. Apparatus comprising:
a first chamber (74);
a second chamber (78);
two spaced components (60);
a gap (68) between said two spaced components;
a slot (64) in each of the components (60), wherein the slots (64) are open to the gap (68) and each slot (64) contains a longitudinal axis (70) the slots (64) each containing an upstream surface (72) proximate the first chamber (74) and a downstream surface (76) proximate the second chamber (78); and
a bridging element (62) for restricting leakage of a fluid from said first chamber (74) to said second chamber (78) through said gap (68);
**characterised in that**:
said bridging element (62) contains a sectional profile, transverse to the longitudinal slot axis (70), that includes a flat central portion (84) disposed between two approximately waveform shaped end portions (86);
said bridging element (62) spans between the two components (60) with the end portions (86) being disposed in the slots (64) and the central portion (84) being disposed in the gap (68); and
the end portions (86) are resiliently sprung into the slots (64), forming an interference fit between the end portions (86) and the upstream and downstream surfaces (72, 76).

2. The apparatus of claim 1 wherein the central portion (84) is adjacent the downstream surfaces (76).

3. The apparatus of claim 1 or 2 wherein the end portions (86) each alternating in direction, first away from and then back towards the gap (68).

4. The apparatus of claim 3 wherein the end portions (86) alternate for approximately one wave cycle.

5. The apparatus of any preceding claim wherein the bridging element (62) is made of a nickel based alloy strip.

6. The apparatus of any preceding claim wherein the longitudinal axis (70) of each slot (74) is linear.

7. The apparatus of any preceding claim wherein the two components (60) are turbine vanes.

8. The apparatus of any preceding claim wherein the fluid is compressor air.

## Patentansprüche

1. Vorrichtung, aufweisend:
eine erste Kammer (74);
eine zweite Kammer (87);
zwei voneinander beabstandete Komponenten (60);
einen Spalt (68) zwischen den beiden voneinander beabstandeten Komponenten;
einen Schlitz (64) in jeder der Komponenten (60), wobei die Schlitze (64) zu dem Spalt (68) hin offen sind und jeder Schlitz (64) eine Längsachse (70) aufweist, wobei die Schlitze (64) jeweils eine strömungsaufwärtige Fläche (72) in der Nähe der ersten Kammer (74) und eine strömungsabwärtige Fläche (76) in der Nähe der zweiten Kammer (78) aufweisen; und
ein Überbrückungselement (62) zum Begrenzen der Leckage eines Fluids aus der ersten Kammer (74) in die zweite Kammer (78) durch den Spalt (68);
**dadurch gekennzeichnet,**
**dass** das Überbrückungselement (62) quer zu der Längsschlitzachse (70) ein Querschnittsprofil aufweist, das einen flachen zentralen Bereich (84) beinhaltet, der zwischen zwei in etwa wellenförmigen Endbereichen (86) angeordnet ist;
**dass** sich das Überbrückungselement (62) derart zwischen den beiden Komponenten (60) erstreckt, dass die Endbereiche (86) in den Schlitzen (64) angeordnet sind und der zentrale Bereich (84) in dem Spalt (68) angeordnet ist; und
**dass** die Endbereiche (86) in den Schlitzen (64) federnd gehaltert sind, so dass ein Festsitz zwischen den Endbereichen (86) und den strömungsaufwärtigen und den strömungsabwärtigen Flächen (72, 76) gebildet ist.

2. Vorrichtung nach Anspruch 1,
wobei der zentrale Bereich (84) den strömungsabwärtigen Flächen (76) benachbart ist.

3. Vorrichtung nach Anspruch 1 oder 2,
wobei die Endbereiche (86) jeweils in ihrer Richtung alternieren und sich zuerst von dem Spalt (68) weg und dann wieder zurück zu dem Spalt (68) hin erstrecken.

4. Vorrichtung nach Anspruch 3,
wobei die Endbereiche (86) in etwa über einen Wellenzyklus alternieren.

5. Vorrichtung nach einem der vorausgehenden Ansprüche,
wobei das Überbrückungselement (62) aus einem Streifen aus einer Legierung auf Nickelbasis hergestellt ist.

6. Vorrichtung nach einem der vorausgehenden Ansprüche,
wobei die Längsachse (70) jedes Schlitzes (74) geradlinig ist.

7. Vorrichtung nach einem der vorausgehenden Ansprüche,
wobei es sich bei den beiden Komponenten (60) um Turbinenschaufeln handelt.

8. Vorrichtung nach einem der vorausgehenden Ansprüche,
wobei es sich bei dem Fluid um Verdichterluft handelt.

## Revendications

1. Dispositif, comprenant:
une première chambre (74);
une deuxième chambre (78);
deux composants espacés (60);
un espace (68) entre lesdits deux composants espacés;
une fente (64) dans chacun des composants (60), dans lequel les fentes (64) sont ouvertes vers l'espace (68), et chaque fente (64) comprend un axe longitudinal (70), et les fentes (64) présentent chacune une surface située en amont (72) à proximité de la première chambre (74), et une surface située en aval (76) à proximité de la deuxième chambre (78); et
un élément de pont (62) pour limiter la fuite d'un fluide de ladite première chambre (74) vers ladite deuxième chambre (78) à travers ledit espace (68);
**caractérisé en ce que**:
ledit élément de pont (62) présente un profil de section, transversal à l'axe longitudinal (70) de la fente, qui comprend une partie centrale plate (84) qui est disposée entre deux parties d'extrémité approximativement en forme d'onde (86);
ledit élément de pont (62) s'étend entre les deux composants (60), avec les parties d'extrémité (86) qui sont disposées dans les fentes (64), et la partie centrale (84) qui est disposée dans l'espace (68); et
les parties d'extrémité (86) sont poussées élastiquement dans les fentes (64), formant un ajustement serré entre les parties d'extrémité (86) et les surfaces situées en aval et en amont (72, 76).

2. Dispositif selon la revendication 1, dans lequel la partie centrale (84) est adjacente aux surfaces situées en aval (76).

3. Dispositif selon la revendication 1 ou 2, dans lequel les parties d'extrémité (86) alternent chacune quant à leur direction, s'écartant d'abord de l'espace (68) avant de revenir vers celui-ci.

4. Dispositif selon la revendication 3, dans lequel les parties d'extrémité (86) alternent d'approximativement un cycle d'onde.

5. Dispositif selon l'une quelconque des revendications précédentes, dans lequel l'élément de pont (62) est constitué d'une bande en alliage à base de nickel.

6. Dispositif selon l'une quelconque des revendications précédentes, dans lequel l'axe longitudinal (70) de chaque fente (74) est linéaire.

7. Dispositif selon l'une quelconque des revendications précédentes, dans lequel les deux composants (60) sont des aubes de turbine.

8. Dispositif selon l'une quelconque des revendications précédentes, dans lequel le fluide est de l'air de compresseur.
